# EUROPEAN PATENT SPECIFICATION

(11) **EP 2 039 273 B1**
(45) Date of publication and mention of the grant of the patent: **11.04.2012**
(21) Application number: 07253728.5
(22) Date of filing: 20.09.2007
(51) Int. Cl.: A47J 19/06

(54) **Food processing device**
Lebensmittelverarbeitungsvorrichtung
Dispositif de traitement d'aliments

(43) Date of publication of application: 25.03.2009
(73) Proprietor: So, Kwok Kuen, Hong Kong SAR (CN)
(72) Inventor: So, Kwok Kuen; 2nd Floor, Chuan Yuan, Kwun tong, Kowloon, Hong Kong SAR (CN); Hood, Lance Logan, Washington 98112 (US); Wong, Clive Koon Yin, San Leandro, CA 94577 (US)
(74) Representative: Martin, David John

(56) References cited:
- EP-A- 1 731 061
- WO-A-94/03091
- WO-A-2005/087063
- US-A- 767 386

## Description

The present invention relates to a food processing device which is, particularly but not exclusively, for mashing and cutting food.

### BACKGROUND OF THE INVENTION

Handheld food presses, mashers and cutters usually come in various different constructions or designs, and independently. A food processing device is described in US 767386 A. Acquiring all these types does not only duplicate the cost but they also take up precious space especially at home.

A construction for one type of food processing devices may not fit another type. If a certain construction can be shared by more than one type for a majority of their parts/components, this will mean significant saving in cost, even at production level, for each type if not all. Multiple functions are a bonus.

The invention seeks to provide a new or otherwise improved food processing device, with the above considerations in mind.

### SUMMARY OF THE INVENTION

According to the invention, there is provided a food processing device comprising a handle, a receptacle supported by the dandle for holding food, the receptacle having a lower opening, a cutter having perforations and extending across the bottom opening of the receptacle, wherein the cutter is detachable from the receptacle, and a presser extendable into the receptacle and movable towards the cutter for pressing food in the receptacle against the cutter, whereby said food is cut into smaller pieces. The presser has a press surface for food pressing, which surface has a protruding pattern matching the perforations of the cutter for passing through the perforations to press food in the receptacle through the cutter,
characterised in that the presser has a presser body and a press member thereon providing the press surface, the press member being detachable from the presser body.

Preferably, the food processing device includes a lever pivotably connected relative to the handle, the lever supporting the presser.

More preferably, the presser is pivotably connected to the lever.

It is preferred that the cutter comprises a lattice of cutting blades arranged for cutting in a common cutting direction, along which direction the presser is movable towards the cutter.

More preferably, the receptacle comprises a cylindrical wall having a lower open end that acts as the bottom opening, and includes an angular retainer releasably connected to the bottom opening for attaching the cutter to the receptacle.

Further more preferably, the retainer has an internal flange for bearing upon the cutter to retain the cutter against the lower open end of the wall.

Further more preferably, the wall has a screw thread, and the retainer has a screw thread for engaging the screw thread of the wall, whereby the retainer is releasably connected to the wall.

More preferably, the presser body and the press member have inter-engageable formations for inter-engagement to attach the press member to the presser body.

Further more preferably, the formations comprise a groove in the presser body and a protrusion on the press member, the groove and the protrusion having complimentary cross-sections for inter-engagement upon sliding together in a direction laterally of the presser body and the press member.

In the preferred embodiment, the food processing device includes a perforated plate attachable to the receptacle as the cutter for replacing the cutter, and a press member having a generally flat press surface attachable to the presser body as the first-mentioned press member for replacing the first-mentioned press member, the flat press surface being movable towards the perforated plate for pressing food in the receptacle against or through the perforated plate.

It is preferred that the food processing device includes a hook on one side of the receptacle opposite the handle, for engaging upon a rim of a food vessel while the handle is resting upon the opposite side of said rim, whereby the food processing device is located on said food vessel.

In a preferred embodiment, the food processing device includes at least two said cutters which have different patterns of perforations and are interchangeably attachable to the bottom opening of the receptacle, wherein the presser includes a said press surface having a protruding pattern matching the perforations of each respective one of the cutters, the press surfaces being interchangeably usable.

More preferably, the food processing device further includes a perforated plate interchangeably attachable to the bottom opening of the receptacle, wherein the presser further includes a generally flat press surface interchangeably usable for pressing food in the receptacle against or through the perforated plate.

### BRIEF DESCRIPTION OF DRAWINGS

The invention will now be more particularly described, by way of example only, with reference to the accompanying drawings, in which:

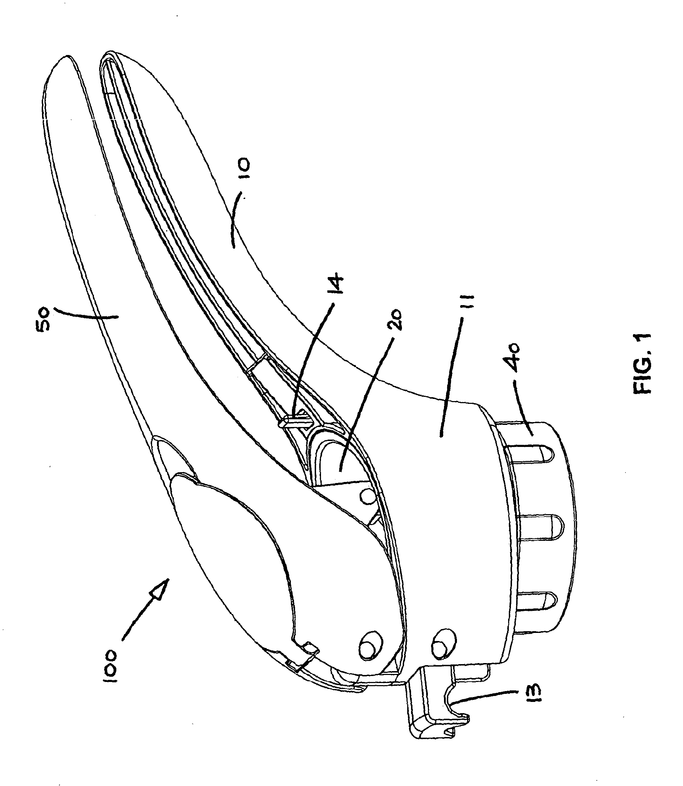

Figure 1 is a front perspective view of an embodiment of a food processing device in accordance with the invention;

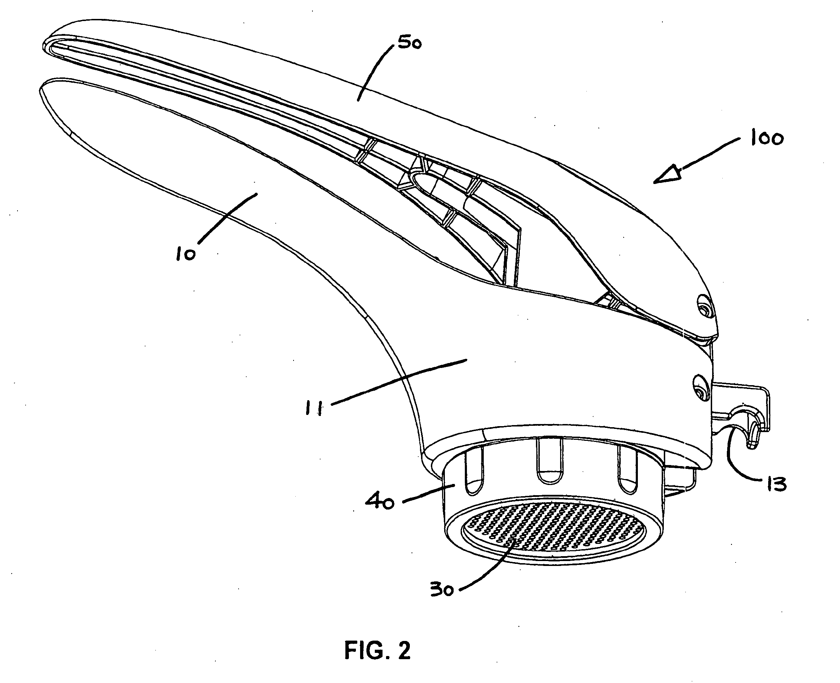

Figure 2 is a rear perspective view of the food processing device of Figure 1;

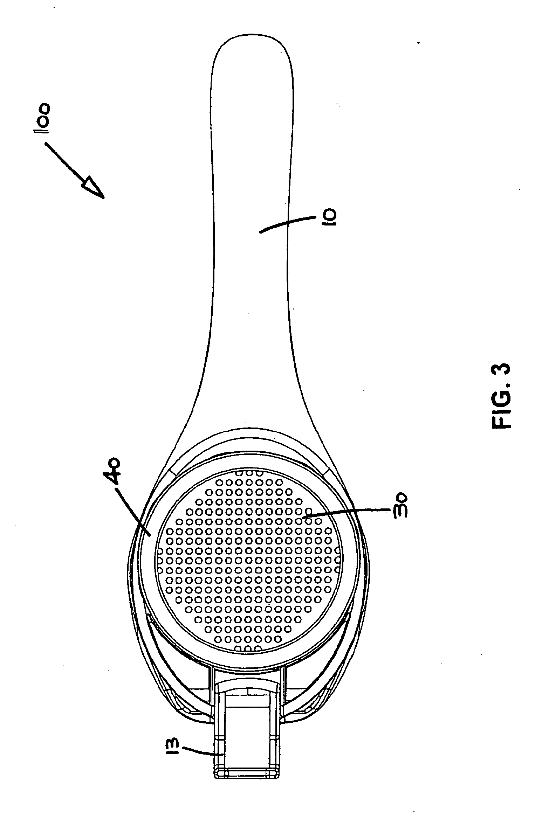

Figure 3 is a bottom plan view of the food processing device of Figure 1;

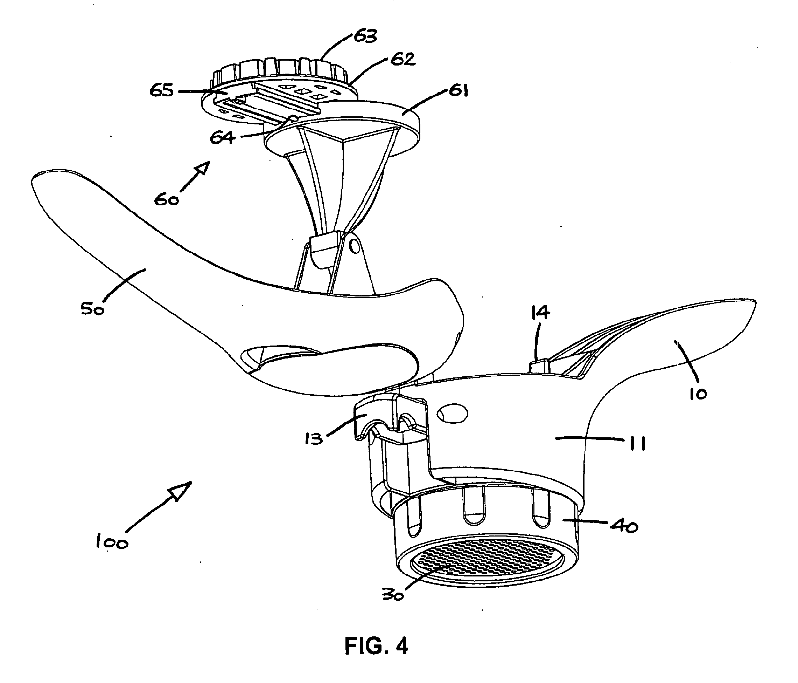

Figure 4 is a perspective view of the food processing device of Figure 1 in an open condition, showing a press head thereof partially detached;

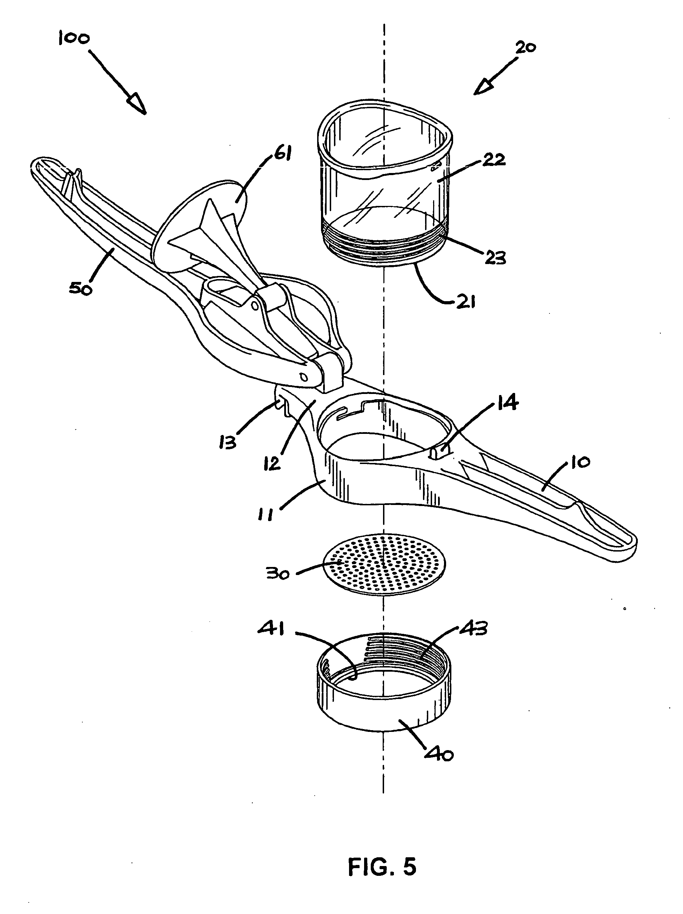

Figure 5 is a perspective view of the food processing device of Figure 4 (with specific details being slightly different), showing certain components separated;

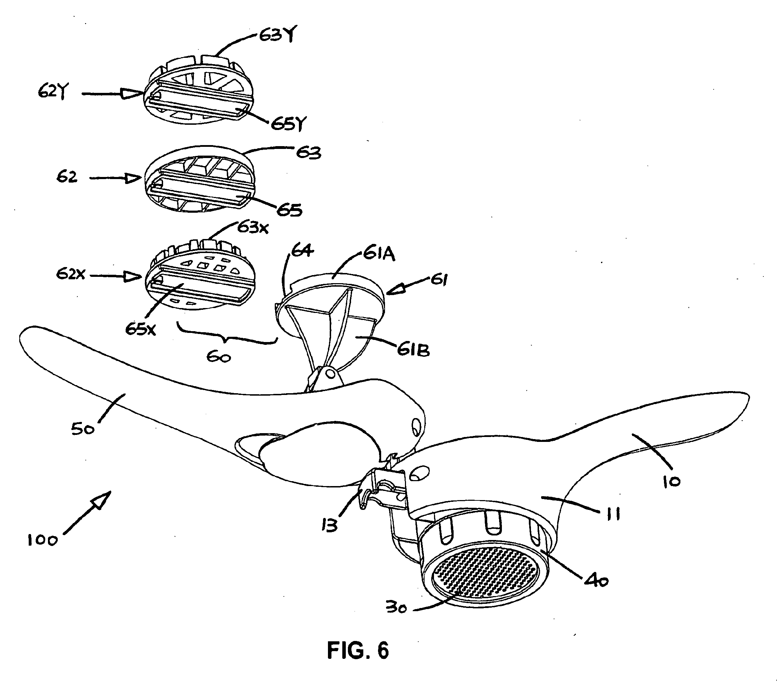

Figure 6 is a perspective view similar to Figure 4, showing the press head detached and two additional press heads for interchangeable use;

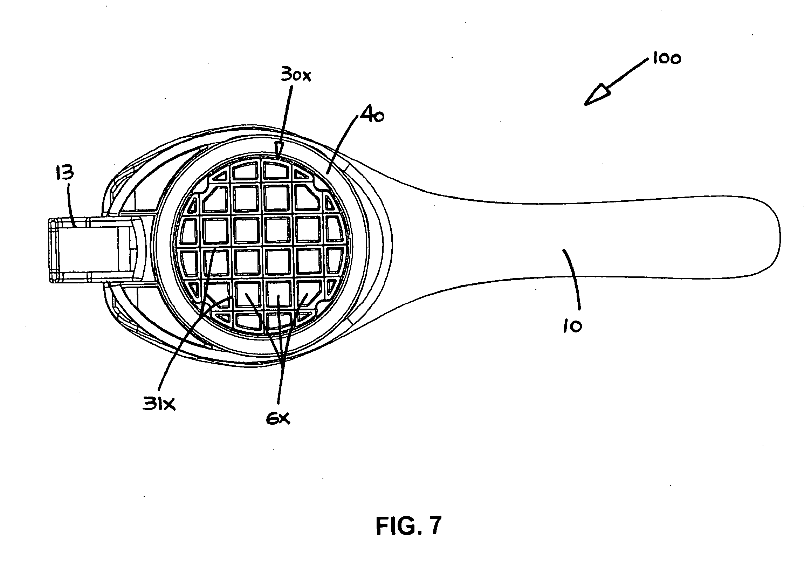

Figure 7 is a bottom plan view of the food processing device of Figure 6, using one interchangeable press head and a co-operating cutter; and

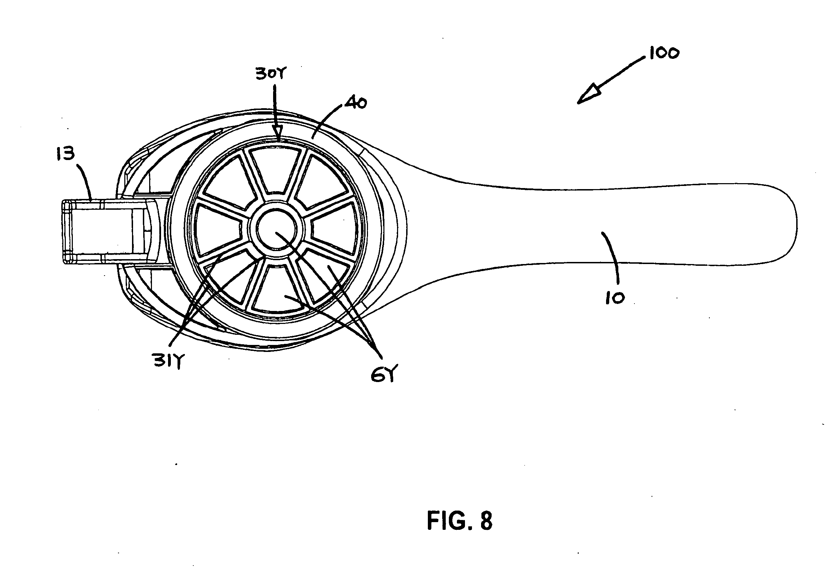

Figure 8 is a bottom plan view of the food processing device of Figure 6, using the other interchangeable press head and a co-operating cutter.

### DETAILED DESCRIPTION OF PREFERRED EMBODIMENT

Referring to the drawings, there is shown a food processing device 100 embodying the invention, which may be used as a food masher for mashing potatoes, pumpkins, butternuts or the like, or as a food presser for pressing garlic or lemons, etc., or as a food cutter/slicer for cutting vegetables and fruits such as potatoes, carrots, apples and pears or even boiled eggs.

While acting as a food masher 100, the device has an elongate handle 10, a cylindrical receptacle 20 supported by the handle 10, and a perforated disc 30 which extends across and closes a lower open end or bottom opening 21 of the receptacle 20 and through which food items, such as cubes of baked potato, in the receptacle 20 are to be mashed through the disc 30. Front end portion of the handle 10 is expanded to form a generally cylindrical collar 11, into which the receptacle 20 is received and suspended by its thickened upper rim. The receptacle 20 is locked in position by a spring-loaded latch 14 in the handle 10.

The receptacle 20 includes a cylindrical wall 22 having an external screw thread 23 around its bottom end 21. A retainer ring 40, which has an internal screw thread 43 designed for engagement with the external screw thread 23, is releasably connected upon screwing onto the bottom end 21 for attaching the perforated disc 30 to the receptacle 20.

The retainer ring 40 has an internal flange 41 and is just sufficiently large to hold the perforated disc 30 therein on the flange 41, with the flange 41 bearing upon the disc 30 and retaining the disc 30 against the bottom end 21 of the wall 22. The retainer ring 40 may be unscrewed for detaching the disc 30 from the receptacle 20.

The food masher 100 includes an upper lever 50 which is pivotably connected at one end to a frontmost end 12 of the handle 10 below, at a position on and adjacent one side (i.e. front side) of the handle collar 11 opposite the main body of the handle 10. A presser 60 is pivotably connected to a front end portion of the lever 50 for support thereby and, in operation, extending downwardly into the receptacle 20 as the lever 50 is pivoted down close to the handle 10. The presser 60 will then slide axially along the receptacle 20 like a piston, towards the perforated disc 30 for pressing potato cubes in the receptacle 20 against the disc 30, whereby the potato cubes are mashed through the perforations of the disc 30, which acts as a masher.

The frontmost end 12 of the handle 10 terminates as a hook 13 which faces downwards for engaging upon a rim of a food vessel while the handle 10 is resting upon the opposite side of the vessel's rim, whereby the food masher 100 may conveniently be located on the food vessel, into which the mashed potato can drop. The hook 13, when not in use, can be folded into a recess of the handle collar 11.

The presser 60 has a presser body 61 in the form of a circular disc 61A and an integral stem 61B extending therefrom and hinged to the lever 50, and includes a disc-like press head 62 on the disc 61A, which provides a generally flat outer press surface 63 for food pressing. The disc 61A and the press head 62 have respective inter-engageable formations 64 and 65 for inter-engagement to releasably attach the press head 62 to the presser body 61.

The aforesaid formations, more specifically, comprise a flat groove 64 which extends across the disc 61A of the presser body 61 and a flat protrusion 65 which extends across the press head 62. The groove 64 and the protrusion 65 have complimentary flat T-shaped cross-sections for inter-engagement upon sliding together as in a dovetail joint, in a direction laterally of the presser body 61 and head 62. The press head 62 may be detached from the presser body 61, upon sliding in the opposite direction.

With its flat press surface 63, the press head 62 is cooperable with the perforated disc 30 to extract juice by pressing food in the receptacle 20 against the perforated disc 30 or to prepare mashed food by pressing food in the receptacle 20 through the perforated disc 30.

These two components 62 and 30 are detachable as described above, and they may be replaced by a set of equivalent components, i.e. a different press head 62X and a disc-like cutter 30X, for cutting/slicing food.

The cutter 30X comprises a lattice of cutting blades 31X formed by two groups of evenly-spaced cutting blades 31X which intercept at right angles with each other to define an array of square perforations noticeably over the central region. The cutter 30X has the same outer diameter as the previous perforated disc 30 to fit inside the retainer ring 40, which may be screwed onto the receptacle 20 to a lesser extent to accommodate the relatively thicker cutter 30X.

The cutting blades 31X are arranged for cutting in a common cutting direction axially of the receptacle 20, along which direction the press head 62X (of the presser 60) is slidable towards the cutter 30X. The blades 31X extend lengthwise at an angle (i.e. 90°) relative to each other and widthwise in the same direction for cutting.

The press head 62X has generally the shape and size as the previous press head 62, including an identical flat T-sectioned protrusion 65X for a dovetail-like joint with the groove 64 of the presser body 61. Its press surface 63X is however different. The press surface 63X is not solid flat but having a protruding pattern of evenly spaced square press knobs 6X noticeably over the central region, which match the perforations of the cutter 30X, albeit slightly smaller. The knobs 6X project outwards to a greater extent than the thickness of the cutter 30X such that they can and are arranged, in operation, to go right through the cutter's perforations for pressing food in the receptacle 20 completely through the cutter 30X, thereby cutting/slicing the food into smaller pieces i.e. strips.

There is another set of interchangeable components for food cutting i.e. press head 62Y and lattice cutter 30Y, which are very similar to the previous press head 62X and cutter 30X, with equivalent parts designated by the same reference numerals suffixed by a letter "Y" instead of "X". The only difference lies in the arrangement of the cutting blades 31Y and hence the shape of the matching press knobs 6Y.

The cutting blades 31Y are arranged in two concentric rings interconnected by eight equiangularly-spaced radial lines, together defining eight trapezium-like perforations and a circular perforation at the centre, that being the shapes of the co-operating press knobs 6Y, albeit slightly smaller.

In the preferred embodiment, the food processing device 100 incorporates at least two cutters 30X and 30Y (of different cutting/slicing patterns) with matching press heads 62X and 62Y (of correspondingly different press patterns) for alternative use, in addition to the masher disc 30 with flat press head 62 as a further option.

Through selective interchangeable use of the cutters 30X/30Y and masher 30 with press heads 62X/62Y/62, the food processing device 100 offers multiple functions in a single tool. This is convenient to use and also represents substantial saving in storage space and production at the outset.

It should be appreciated that modifications and alterations obvious to those skilled in the art are not to be considered as beyond the scope of the present invention. The invention is defined by the attached claims. For example, although their press surfaces 63X/63Y have protruding knobs, the press head 62X/62Y may be used in conjunction with the perforated disc 30 for mashing food or extracting juice.

## Claims

1. A food processing device (100) comprising:
a handle (10);
a receptacle (20) supported by the handle for holding food, the receptacle having a lower opening;
a cutter (30) having perforations and extending across the bottom opening of the receptacle wherein the cutter is detachable from the receptacle; and
a presser (60) extendable into the receptacle (20) and movable towards the cutter (30) for pressing food in the receptacle (20) against the cutter (30), whereby said food is cut into smaller pieces;
wherein the presser (60) has a press surface (63) for food dressing, which surface has a protruding pattern matching the perforations of the cutter (30) for passing through the perforations to press food in the receptacle through the cutter (30)
**characterized in that** the presser (60) has a presser body (61) and a press member (62) thereon providing the press surface (63), the press member (62) being detachable from the presser body (61).

2. The food processing device as claimed in claim 1; including a lever (50) pivotably connected relative to the handle (10), the lever supporting the presser (60).

3. The food processing device as claimed in claim 2, wherein the presser (60) is pivotably connected to the lever (50).

4. The food processing device as claimed in any one of claims 1 to 3, wherein the cutter (30) comprises a lattice of cutting blades (31) arranged for cutting in a common cutting direction, along which direction the presser (60) is movable towards the cutter.

5. The food processing device as claimed in claim 1, wherein the receptacle (20) comprises a cylindrical wall (22) having a lower open end (21) that acts as the bottom opening, and includes an annular retainer (40) releasably connected to the bottom opening (21) for attaching the cutter (30) to the receptacle (20).

6. The food processing device as claimed in claim 5, wherein the retainer (40) has an internal flange (41) for bearing upon the cutter (30) to retain the cutter against the lower open end of the wall (22).

7. The food processing device as claimed in claim 5, wherein the wall has a screw thread (23), and the retainer (40) has a screw thread (43) for engaging the screw thread of the wall, whereby the retainer is releasably connected to the wall (22).

8. The food processing device as claimed in claim 1, wherein the presser body (61) and the press member (62) have inter-engageable formations (64,65) for inter-engagement to attach the press member (62) to the presser body (61).

9. The food processing device as claimed in claim 8, wherein the formations (64,65) comprise a groove (64) in the presser body (61) and a protrusion (65) on the press member (62), the groove and the protrusion having complimentary cross-sections for inter-engagement upon sliding together in a direction laterally of the presser body and the press member.

10. The food processing device as claimed in claim 1, including a perforated plate (30) attachable to the receptacle (20) as the cutter (30) for replacing the cutter, and a press member (62) having a generally flat press surface (63) attachable to the presser body (61) as the first-mentioned press member for replacing the first-mentioned press member, the flat press surface being movable towards the perforated plate for pres sing food in the receptacle against or through the perforated plate.

11. The food processing device as claimed in any one of claims 1 to 3 and 5 to 7, including a hook (13) on one side of the receptacle (20) opposite the handle (10), for engaging upon a rim of a food vessel while the handle is resting upon the opposite side of said rim, whereby the food processing device is located on said food vessel.

12. The food processing device as claimed in any one of claims 1 to 3 and 5 to 7, including at least two said cutters (30) which have different patterns of perforations and are interchangeably attachable to the bottom opening (21) of the receptacle (20), wherein the presser (60) includes a said press surface (63) having a protruding pattern matching the perforations of each respective one of the cutters, the press surfaces being interchangeably usable.

13. The food processing device as claimed in claim 12, further including a perforated plate (30) interchangeably attachable to the bottom opening (21) of the receptacle (20), wherein the presser (60) further includes a generally flat press surface (63) interchangeably usable for pressing food in the receptacle (20) against or through the perforated plate.

## Patentansprüche

1. Nahrungsmittel-Verarbeitungsvorrichtung (100), die Folgendes umfasst:
einen Handgriff (1 0),
einen Behälter (20), der durch den Handgriff getragen wird, um Nahrungsmittel aufzunehmen, wobei der Behälter eine untere Öffnung hat,
eine Schneideinrichtung (30), die Perforierungen hat und sich über die untere Öffnung des Behälters erstreckt, wobei die Schneideinrichtung von dem Behälter abgenommen werden kann, und
eine Presseinrichtung (60), die sich in den Behälter (20) erstrecken kann und zu der Schneideinrichtung (30) hin bewegt werden kann, um Nahrungsmittel in dem Behälter (20) gegen die Schneideinrichtung (30) zu pressen, wodurch die Nahrungsmittel in kleinere Stücke geschnitten werden,
wobei die Presseinrichtung (60) eine Pressfläche (63) zum Nahrungsmittelpressen hat, wobei die Fläche ein vorspringendes Muster hat, das mit dem Perforierungen der Schneideinrichtung (30) zusammenpasst, so dass es durch die Perforierungen hindurchgeht, um die Nahrungsmittel in dem Behälter durch die Schneideinrichtung (30) zu pressen,
**dadurch gekennzeichnet, dass** die Presseinrichtung (60) einen Presseinrichtungskörper (61) und ein Presselement (62) an demselben, das die Pressfläche (63) bereitstellt, hat, wobei das Presselement (62) von dem Presseinrichtungskörper (61) abgenommen werden kann.

2. Nahrungsmittel-Verarbeitungsvorrichtung nach Anspruch 1, die einen Hebel (50) einschließt, der im Verhältnis zu dem Handgriff (10) schwenkbar verbunden ist, wobei der Hebel die Presseinrichtung (60) trägt.

3. Nahrungsmittel-Verarbeitungsvorrichtung nach Anspruch 2, wobei die Presseinrichtung (60) schwenkbar mit dem Hebel (50) verbunden ist.

4. Nahrungsmittel-Verarbeitungsvorrichtung nach einem der Ansprüche 1 bis 3, wobei die Schneideinrichtung (30) ein Gitter von Schneidklingen (31) umfasst, die zum Schneiden in einer gemeinsamen Schneidrichtung anbeordnet sind, wobei längs dieser Richtung die Presseinrichtung (60) zu der Schneideinrichtung hin bewegt werden kann.

5. Nahrungsmittel-Verarbeitungsvorrichtung nach Anspruch 1, wobei der Behälter (20) eine zylindrische Wand (22) umfasst, die ein unteres offenes Ende (21) hat, das als die untere Öffnung fungiert, und einen ringförmigen Halter (40) einschließt, der lösbar mit der unteren Öffnung (21) verbunden ist, um die Schneideinrichtung (30) an dem Behälter (20) zu befestigen.

6. Nahrungsmittel-Verarbeitungsvorrichtung nach Anspruch 5, wobei der Halter (40) einen inneren Flansch (41) hat, zum Aufliegen auf der Schneideinrichtung (30), um die Schneideinrichtung gegen das untere offene Ende der Wand (22) zu halten.

7. Nahrungsmittel-Verarbeitungsvorrichtung nach Anspruch 5, wobei die Wand ein Schraubengewinde (23) hat und der Halter (40) ein Schraubengewinde (43) hat, um das Schraubengewinde der Wand in Eingriff zu nehmen, wodurch der Halter lösbar mit der Wand (22) verbunden wird.

8. Nahrungsmittel-Verarbeitungsvorrichtung nach Anspruch 1, wobei der Presseinrichtungskörper (61) und das Presselement (62) miteinander in Eingriff zu bringende Formationen (64, 65) haben, für einen wechselseitigen Eingriff, um das Presselement (62) an dem Presseinrichtungskörper (61) zu befestigen.

9. Nahrungsmittel-Verarbeitungsvorrichtung nach Anspruch 8, wobei die Formationen (64, 65) eine Rille (64) in dem Presseinrichtungskörper (61) und einen Vorsprung (65) an dem Presselement (62) umfassen, wobei die Rille und der Vorsprung komplementäre Querschnitte haben, für einen wechselseitigen Eingriff auf ein Zusammengleiten hin in einer Richtung, seitlich von dem Presseinrichtungskörper und dem Presselement.

10. Nahrungsmittel-Verarbeitungsvorrichtung nach Anspruch 1, die eine perforierte Platte (30), die an dem Behälter (20) als die Schneidvorrichtung (30) befestigt werden kann, um die Schneideinrichtung zu ersetzen, und ein Presselement (62), das eine im Allgemeinen ebene Pressfläche (63) hat, das als das zuerst erwähnte Presselement an dem Presseinrichtungskörper (61) befestigt werden kann, um das zuerst erwähnte Presselement zu ersetzen, einschließt, wobei die ebene Pressfläche zu der perforierten Platte hin bewegt werden kann, um die Nahrungsmittel in dem Behälter gegen oder durch die perforierte Platte zu pressen.

11. Nahrungsmittel-Verarbeitungsvorrichtung nach einem der Ansprüche 1 bis 3 und 5 bis 7, die einen Haken (13) auf einer dem Handgriff (10) gegenüberliegenden Seite des Behälters (20) einschließt, um an einem Rand eines Nahrungsmittelgefäßes in Eingriff zu kommen, während der Handgriff auf der gegenüberliegenden Seite des Randes aufliegt, wodurch die Nahrungsmittel-Verarbeitungsvorrichtung an dem Nahrungsmittelgefäß positioniert wird.

12. Nahrungsmittel-Verarbeitungsvorrichtung nach einem der Ansprüche 1 bis 3 und 5 bis 7, die wenigstens zwei Schneideinrichtungen (30) einschließt, die unterschiedliche Muster von Perforierungen haben und austauschbar an der unteren Öffnung (21) des Behälters (20) befestigt werden können, wobei die Presseinrichtung (60) eine Pressfläche (63) einschließt, die ein vorspringendes Muster hat, das mit den Perforierungen jeder jeweiligen der Schneideinrichtungen zusammenpasst, wobei die Pressflächen austauschbar verwendet werden können.

13. Nahrungsmittel-Verarbeitungsvorrichtung nach Anspruch 12, die ferner eine perforierte Platte (30) einschließt, die austauschbar an der unteren Öffnung (21) des Behälters (20) befestigt werden kann, wobei die Presseinrichtung (60) ferner eine im Allgemeinen ebene Pressfläche (63) einschließt, die austauschbar dafür verwendet werden kann, die Nahrungsmittel in dem Behälter (20) gegen oder durch die perforierte Platte zu pressen.

## Revendications

1. Dispositif de traitement d'aliments (100), comprenant :
un manche (10) ;
un récipient (20), supporté par le manche pour retenir les aliments, le récipient comportant une ouverture de fond ;
un moyen de coupe (30), comportant des perforations et s'étendant à travers l'ouverture de fond du récipient, le moyen de coupe pouvant être détaché du récipient ; et
un moyen presseur (60), pouvant s'étendre dans le récipient (20) et pouvant être déplacé vers le moyen de coupe (30) pour presser les aliments contenus dans le récipient (20) contre le moyen de coupe (30), lesdits aliments étant ainsi découpés en morceaux plus petits ;
le moyen presseur (60) comportant une surface de pression (63) pour presser les aliments, cette surface comportant un motif en saillie adapté aux perforations du moyen de coupe (30), afin de passer à travers les perforations pour presser les aliments contenus dans le récipient à travers le moyen de coupe (30) ;
**caractérisé en ce que** le moyen presseur (60) comporte un corps presseur (61) et un élément presseur (62) agencé sur celui-ci, formant la surface de pression (63), l'élément presseur (62) pouvant être détaché du corps presseur (61).

2. Dispositif de traitement d'aliments selon la revendication 1, englobant un levier (50) connecté de manière pivotante par rapport au manche (10), le levier supportant le moyen presseur (60).

3. Dispositif de traitement d'aliments selon la revendication 2, dans lequel le moyen presseur (60) est connecté de manière pivotante au levier (50).

4. Dispositif de traitement d'aliments selon l'une quelconque des revendications 1 à 3, dans lequel le moyen de coupe (30) comprend un réseau de lames de coupe (31) destinées à couper dans une direction de coupe commune, le moyen presseur (60) pouvant être déplacé vers le moyen de coupe le long de cette direction.

5. Dispositif de traitement d'aliments selon la revendication 1, dans lequel le récipient (20) comprend une paroi cylindrique (22) comportant une extrémité inférieure ouverte (21), constituant l'ouverture de fond, et englobe un élément de retenue annulaire (40), connecté de manière amovible à l'ouverture de fond (21) pour fixer le moyen de coupe (30) sur le récipient (20).

6. Dispositif de traitement d'aliments selon la revendication 5, dans lequel le moyen de retenue (40) comporte une bride interne (41) destinée à reposer sur le moyen de coupe (30) pour retenir le moyen de coupe contre l'extrémité inférieure ouverte de la paroi (22).

7. Dispositif de traitement d'aliments selon la revendication 5, dans lequel la paroi comporte un filet de vis (23) et la retenue (40) comporte un filet de vis (43) destiné à s'engager dans le filet de vis de la paroi, l'élément de retenue étant ainsi connecté de manière amovible à la paroi (22).

8. Dispositif de traitement d'aliments selon la revendication 1, dans lequel le corps presseur (61) et l'élément presseur (62) comportent des structures à engagement mutuel (64, 65) en vue d'un engagement mutuel pour fixer l'élément presseur (62) sur le corps presseur (61).

9. Dispositif de traitement aliments selon la revendication 8, dans lequel les structures (64, 65) comprennent une rainure (64) dans le corps presseur (61) et une saillie (65) sur l'élément presseur (62), la rainure et la saillie ayant des sections transversales complémentaires en vue d'un engagement mutuel lors du glissement commun dans une direction latérale par rapport au corps presseur et à l'élément presseur

10. Dispositif de traitement d'aliments selon la revendication 1, englobant une plaque perforée (30) pouvant être fixée sur le récipient (20) pour servir de moyen de coupe (30), pour remplacer le moyen de coupe, et un élément presseur (62) comportant une surface de pression généralement plate (63), pouvant être fixée sur le corps presseur (61) pour servir de premier élément presseur, pour remplacer le premier élément presseur, la surface de pression plate pouvant être déplacée vers la plaque perforée pour presser les aliments dans le récipient contre ou à travers la plaque perforée.

11. Dispositif de traitement d'aliments selon l'une quelconque des revendications 1 à 3 et 5 à 7, englobant un crochet (13) sur un côté du récipient (20) opposé au manche (10), destiné à s'engager dans un rebord d'un bol à aliments, pendant que le manche repose sur le côté opposé dudit rebord, le dispositif de traitement des aliments étant ainsi positionné sur ledit bol à aliments.

12. Dispositif de traitement d'aliments selon l'une quelconque des revendications 1 à 3 et 5 à 7, englobant au moins deux dits moyens de coupe (30), comportant des motifs différents de perforations et pouvant être fixés de manière interchangeable sur l'ouverture de fond (21) du récipient (20), le moyen presseur (60) englobant une dite surface de pression (63) comportant un motif en saillie adapté aux perforations de chaque moyen de coupe respectif, les surfaces de pression pouvant être utilisées de manière interchangeable.

13. Dispositif de traitement d'aliments selon la revendication 12, englobant en outre une plaque perforée (30), pouvant être fixée de manière interchangeable sur l'ouverture de fond (21) du récipient (20), le moyen presseur (60) englobant en outre une surface de pression généralement plate (63), pouvant être utilisée de manière interchangeable pour presser les aliments contenus dans le récipient (20) contre ou à travers la plaque perforée.
